# EUROPÄISCHE PATENTSCHRIFT

(11) **EP 2 179 928 B1**
(45) Veröffentlichungstag und Bekanntmachung des Hinweises auf die Patenterteilung: **01.05.2013**
(21) Anmeldenummer: 09013243.2
(22) Anmeldetag: 20.10.2009
(51) Int. Cl.: B65B 47/02, B65B 9/04, B65B 47/04, B65B 47/08, B65B 47/10

(54) **Verfahren zur Herstellung einer Verpackung sowie Verpackungsmaschine**
Method for producing a package and packaging machine
Procédé de fabrication d'un emballage et machine d'emballage

(30) Priorität: 21.10.2008 DE 102008052599
(43) Veröffentlichungstag der Anmeldung: 28.04.2010
(73) Patentinhaber: Multivac Sepp Haggenmüller GmbH & Co. KG, 87787 Wolfertschwenden (DE)
(72) Erfinder: Grimm, Bernhard, 87435 Memmingen (DE)
(74) Vertreter: Grünecker, Kinkeldey, Stockmair & Schwanhäusser

(56) Entgegenhaltungen:
- DE-A1-102005 061 315
- US-A- 3 686 822
- US-A- 4 229 927

## Beschreibung

Die Erfindung betrifft ein Verfahren zur Herstellung einer Verpackung nach dem Oberbegriff des Anspruchs 1 sowie eine Verpackungsmaschine zur Herstellung einer Verpackung nach dem Oberbegriff des Anspruchs 11.

Aus dem Stand der Technik bekannt sind handelsübliche Verpackungsmaschinen, welche eine Formstation, insbesondere eine Tiefziehstation umfassen. Derartige Verpackungsmaschinen stellen aus einer Ober- und einer Unterfolie eine Verpackung her. In der Tiefziehstation wird in die Unterfolie beispielsweise eine Mulde geformt. Üblicherweise wird die Folie mit Druckluft nach unten in das Formwerkzeugunterteil gedrückt und gleichzeitig über Anlegen eines Unterdrucks im Formwerkzeugunterteil in die entsprechende Form gezogen. Dabei kühlt die Folie an den Seitenwänden und am Boden ab, wobei entsprechende Teile der Formstation auch gekühlt werden und die Folie somit in ihrer geformten Struktur schnell erstarrt. (siehe das Dokument DE 102005 061 315 A1).

Um die Folie nach unten in das Formwerkzeugunterteil zu drücken, werden zum Teil auch bei dicken Folien Stempel im Oberteil verwendet, um den Formprozess zu unterstützen.

Für das Erwärmen, Verformen und Erstarren der Folie stehen im Allgemeinen nur gewisse Zeitspannen zur Verfügung, je nach dem, welchen Durchsatz an hergestellten Verpackungen eine entsprechende Verpackungsmaschine leisten soll.

Aufgabe der Erfindung ist es, ein Verfahren zur Herstellung einer Verpackung bzw. eine Verpackungsmaschine vorzuschlagen, bei welchem bzw. bei welcher eine verbesserte Abstimmung einzelner Herstellungsschritte ermöglicht wird.

Die Aufgabe wird, ausgehend von einem Verfahren bzw. einer Verpackungsmaschine der eingangs genannten Art, durch die kennzeichnenden Merkmale des Anspruchs 1 bzw. durch die kennzeichnenden Merkmale des Anspruchs 11 gelöst.

Durch die in den abhängigen Ansprüchen genannten Merkmale sind vorteilhafte Ausführungen und Weiterbildungen der Erfindung möglich.

Dementsprechend zeichnet sich ein erfindungsgemäßes Verfahren zur Herstellung einer Verpackung aus Folie dadurch aus, dass in einem gleichen Zeitintervall während des Erwärmungsprozesses auf beiden Seiten des Folienabschnitts jeweils ein Unterdruck in Bezug auf den Umgebungsdruck erzeugt wird.

Der Erwärmungsprozess dient in der Regel dazu, die entsprechende Folie verformbar zu machen. Durch die Erzeugung eines Unterdrucks wirkt eine entsprechende Kraft in der Folie, wodurch die Folie in die entsprechende Seite gezogen wird. Je nachdem, auf welcher Seite der Unterdruck stärker ausgebildet ist, wird die Folie stärker zu der einen oder zu der anderen Seite gezogen. Dies kann zur verbesserten Abstimmung einzelner Herstellungsschritte, insbesondere sofern diese aufeinander folgen, genutzt werden.

Daher kann es besonders vorteilhaft sein, wenn zu gleichen Zeitpunkten unterschiedliche Unterdrücke auf beiden Seiten des Folienabschnitts erzeugt werden. Zu einem solchen entsprechenden Zeitpunkt wird die Folie in Richtung der Seite mit dem stärkerem Unterdruck gezogen. Durch Änderung der Druckverhältnisse kann diese Krafteinwirkung auch wieder den Herstellungsschritten entsprechend verändert werden.

Insbesondere kann auch während einer gewissen Zeitspanne beim Erwärmungsprozess wenigstens einer dieser Unterdrücke stationär sein, dass heißt auf der jeweiligen Seite in dieser Zeitspanne zeitlich konstant.

Bei einer vorteilhaften Ausführungsform der Erfindung kann die Erzeugung eines Unterdrucks auf einer der beiden Seiten zu einem Zeitpunkt einsetzen, zu dem auf der anderen Seite bereits ein stationärer Unterdruck erzeugt worden ist, durch den die Folie in die entsprechende Richtung gezogen wird. Des Weiteren können während des Erwärmungsprozesses die Unterdrücke zu beiden Seiten des Folienabschnitts so erzeugt werden, dass diese von ihrem Betrag her stets jeweils zunehmen oder konstant gehalten werden.

Als nächster Herstellungsschritt könnte beispielsweise auf den Erwärmungsprozess ein Ausformungsprozess zum Formen des erwärmten Folienabschnitts folgen.

Es ist besonders vorteilhaft, wenn der Folienabschnitt während des Erwärmungsprozesses von der Seite her erwärmt wird, auf welcher der vom Betrag her zu gleichen Zeitpunkten größere Unterdruck herrscht. Da nämlich auf dieser entsprechenden Seite der größere Unterdruck herrscht wird die Folie auch stärker in diese Richtung gezogen und somit näher an eine entsprechende Erwärmungseinheit herangeführt.

Eine derartige Erwärmung des Folienabschnitts kann beispielsweise auf einfache Weise mittels einer Heizplatte erfolgen.

Für den Ausformungsprozess kann auf der Seite, welche der Seite mit der Erwärmungseinheit gegenüber liegt, eine Form zur Formung des erwärmten Folienabschnitts vorhanden sein. Um die Folie entsprechend in Richtung der Form zu ziehen, muss der Unterdruck, welcher auf der Seite herrscht, auf welcher die Erwärmung stattfindet, vermindert werden. Wird der Unterdruck geringer als der auf der anderen Seite, auf welcher sich die Form befindet, so wird die Folie auch entsprechend in Richtung der Form gezogen. Dies kann auch dadurch unterstützt werden, dass der Unterdruck nicht nur vom Betrag her reduziert wird, sondern dass sogar ein Überdruck erzeugt wird, dadurch kann die Kraft, welche an der Folie wirkt, noch einmal vergrößert werden, sodass der entsprechende Verformungsprozess noch schneller ablaufen kann.

Grundsätzlich ist es allerdings auch möglich, anstelle des Überdrucks oder auch zusätzlich zum Überdruck einen Formstempel einzusetzen.

Dementsprechend zeichnet sich eine erfindungsgemäße Verpackungsmaschine zur Herstellung einer Verpackung aus Folie nach dem Oberbegriff des Anspruchs 14 dadurch aus, dass die Vorrichtung zur Erzeugung von Unterdrücken dazu ausgebildet ist, in einem gleichen Zeitintervall während der Erwärmung auf beiden Seiten des Folienabschnitts jeweils ein Unterdruck in Bezug auf die Umgebungsdruck zu erzeugen.

Insbesondere in Bezug auf das Ausformen der Folie besitzt das erfindungsgemäße Verfahren bzw. eine erfindungsgemäße Verpackungsmaschine eine Reihe von Vorteilen. Bereits während des Erwärmungsprozesses wird auf der Seite, auf welcher sich die Form befindet, Luft abgesaugt, um einen entsprechenden Unterdruck zu erzeugen. Insbesondere dann, wenn der spätere Ausformungsprozess der erwärmten Folie sehr schnell abläuft, kann somit ein Restvolumen an Luft, welches auf der Seite des Formwerkzeugs verblieben ist, verringert werden gegenüber dem Fall, für den der Unterdruck erst später erzeugt wird. Je größer nämlich das verbliebene Restvolumen an Luft ist, desto ungenauer kann sich die erwärmte Folie an die entsprechende Form anpassen. Somit wird ermöglicht, die Ausformung beispielsweise von Kanten und Rundungen noch einmal zu verbessern. Durch den Zeitgewinn, der dadurch entsteht, dass auf der Seite der Form nicht erst ein Unterdruck erzeugt werden muss, kann die Verformung der erwärmten Folie wesentlich schneller vonstatten gehen. Während des reinen Ausformungsvorgangs kühlt damit die Folie in der Regel auch nicht so stark ab.

Dieses vorzeitige Absaugen von Luft während des Erwärmungsprozesses im Bereich, in dem sich die Form befindet, ermöglicht es, die Gefahr zu verringern, dass die Luft insbesondere infolge von Strömungswiderständen durch kleine Bohrungen, Spalten in Formeinsätzen, Stützplatten usw nicht schnell genug entweichen kann und sich ein Luftpolster unter der zu verformenden Folie bildet, welches den Formprozess störend beeinflusst.

In einigen Fällen kann sogar darauf verzichtet werden, einen zusätzlichen Formstempel zu verwenden. Außerdem kann die benötigte Zeit für den Herstellungsprozess der Verpackungen noch einmal reduziert werden, sodass auch ein höherer Durchsatz einer entsprechenden Verpackungsmaschine ermöglicht wird. Insgesamt kann sich also auch in vielfältiger Hinsicht durch die genannten Maßnahmen ergeben.

Des Weiteren kann der Prozessablauf des Verfahrens bzw. eine entsprechende Verpackungsmaschine im Allgemeinen leicht angepasst bzw. umgestellt werden da lediglich eine entsprechende Anpassung der Ventilschaltung bzw. der Ventilsteuerung/-Regelung erforderlich ist.

### Ausführungsbeispiel:

Ein Ausführungsbeispiel der Erfindung ist in der Zeichnung dargestellt und wird anhand der Figuren nachstehend unter Nennung zusätzlicher Vorteil näher erläutert. Im Einzelnen zeigen:
- Figur 1: eine Verpackungsmaschine mit einer Tiefziehstation gemäß der Erfindung,
- Figur 2: ein schematischer Schnitt durch eine entsprechende Tiefziehstation, bei der gerade im Oberteil ein Unterdruck so erzeugt wird, dass die Folie gegen eine Heizplatte gedrückt wird,
- Figur 3: ein schematischer Schnitt durch eine entsprechende Tiefziehstation, bei welcher der Unterdruck im Unterteil sowie der Überdruck im Oberteil der Formstation die Folie in Richtung der Form zieht bzw. drückt, sowie
- Figur 4: ein schematisches Diagramm, welches die Zeitabläufe in Bezug auf die Erzeugung von Über- bzw. Unterdruck im Ober- und Unterteil der Tiefziehstation darstellen.

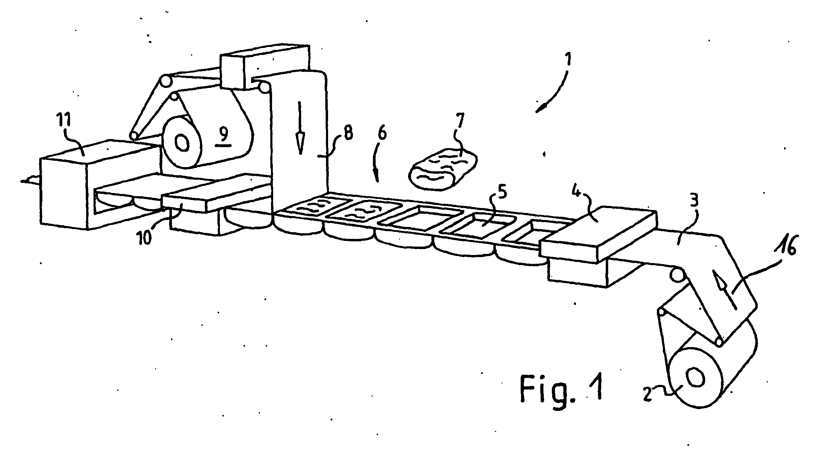

Figur 1 zeigt eine Verpackungsmaschine 1 mit einer Rolle 2 mit Unterfolie 3, einer Formstation bzw. Tiefziehstation 4 zum Ausformen einer Mulde 5 in der Unterfolie 3. Die Mulde 5 wird mit dem zu verpackenden Gut 7 befüllt. Die befüllte Mulde 6 wird im weiteren Verlauf mit einer Oberfolie 8, die von einer Rolle 9 mit Oberfolie 8 abgewickelt wird, bedeckt und mittels einer Siegelstation 10 versiegelt. Anschließend können die Verpackungen durch eine Schneideeinheit 11 vereinzelt werden. Die Richtung des Folienvorschubs ist durch den Pfeil 16 gekennzeichnet.

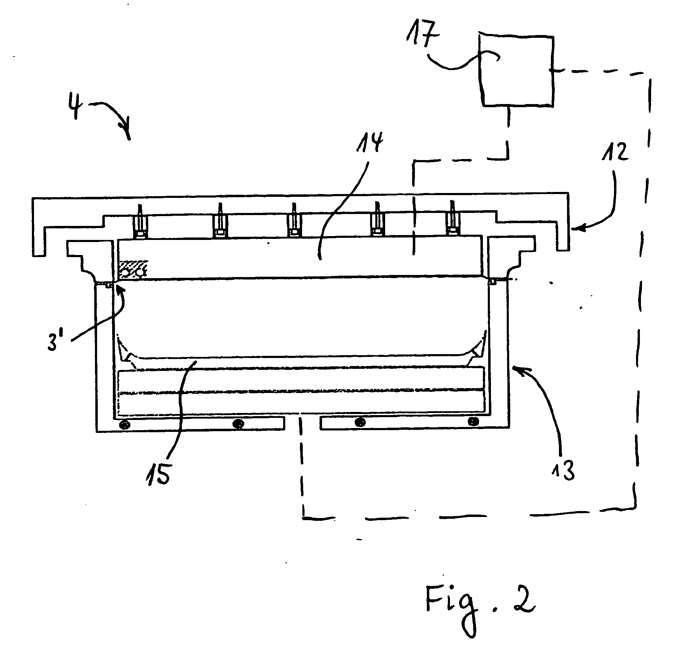

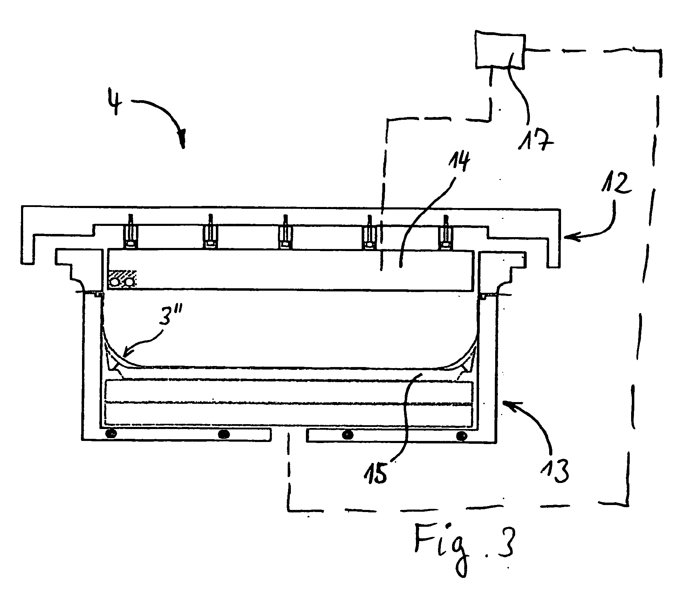

Ein schematischer Schnitt durch die Tiefziehstation 4 ist in den Figuren 2 und 3 dargestellt. Sie umfasst ein Oberteil 12, in dem eine Heizplatte 14 untergebracht ist, und ein Unterteil 13, in dem eine Form 15 angebracht ist.

In Figur 2 herrscht sowohl im Oberteil 12 als auch im Unterteil 13 ein Unterdruck. Da der Unterdruck im Oberteil 12 jedoch stärker ist als der Unterdruck im Unteil 13, wird die Folie 3' gegen die Heizplatte 14 gezogen und dort erwärmt. Der jeweilige Unterdruck im Oberteil 12 bzw. im Unterteil 13 wird durch die Vorrichtung 17 zur Erzeugung von Über- bzw. Unterdruck erzeugt. Diese Vorrichtung 17 umfasst hier zwei Vakuumpumpen, jeweils für das Oberteil 12 und das Unterteil 13.

Figur 3 hingegen zeigt eine weitere Situation während des Herstellungsprozesses eine Verpackung, bei der im Oberteil 12 ein Überdruck erzeugt wird, während im Unteil 13 immer noch ein Unterdruck herrscht, sodass die erwärmte Folie 3" in Richtung der Form 15 gezogen wird und sich an diese anpassen kann. Schließlich kann sich die erwärmte Folie an den Wänden der Form 15 bzw. des Unterteils 13 abkühlen und erstarren. Zur Erzeugung des Überdrucks umfasst die Vorrichtung 17 auch einen Druckspeicher, um unter Druck stehendes Gas in das Oberteil 12 einzuleiten.

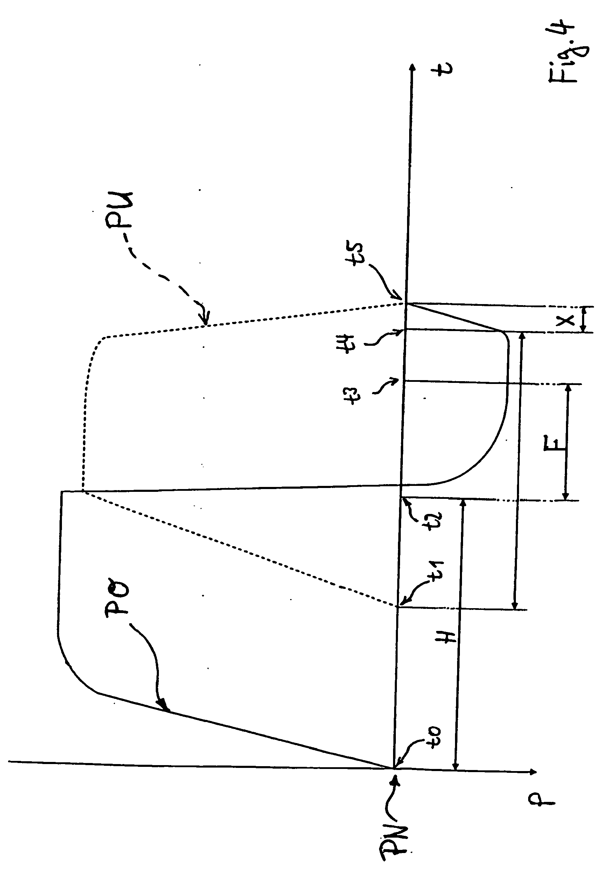

Figur 4 zeigt den schematischen Ablauf, wie Über- und Unterdruck im Oberteil 12 bzw. im Unterteil 13 kontrolliert werden. Dabei zeigt das Diagramm in Figur 4 eine Zeitachse t und eine Druckachse p, wobei ein Überdruck in Richtung des Pfeils (nach unten) und ein Unterdruck in die entgegengesetzte Richtung aufgezeichnet wird. Der Schnittpunkt zwischen den Achsen p und t bezeichnet einerseits einen Zeitpunkt t0 auf der Zeitachse t, bei dem der gesamte Prozess in der Tiefziehstation 4 beginnt, andererseits den Umgebungsdruck PN, also den Normaldruck, in der Regel z.B. etwa 1013 Millibar je nach den Umgebungs-, Witterungsverhältnissen usw. Die Kurve PO beschreibt den Druckverlauf im Oberteil 12, die Kurve PU den Druckverlauf im Unterteil 13.

Zum Zeitpunkt t0 wird ein Unterdruck im Oberteil 12 aufgebaut, bis ein stationärer Unterdruck erzeugt ist. Währenddessen kann sich die Folie 3' an der Heizplatte 14 erwärmen. Nachdem ein stationärer Unterdruck im Oberteil 12 aufgebaut ist, wird zum Zeitpunkt t1 angefangen, einen Unterdruck auch im Unterteil 13 aufzubauen. Dieser Unterdruck im Unterteil 13 ist jedoch zunächst während des Erwärmungsprozesses H zwischen den Zeitpunkten t0 und t2 nicht stärker als der Unterdruck im Oberteil 12, sodass die Folie 3' in dieser Zeit weiterhin an der Heizplatte 14 anliegen kann.

Zum Zeitpunkt t2 beginnt der Formvorgang F, indem der Unterdruck rapide durch einen Überdruck ersetzt wird, z.B. durch Öffnen und Einleiten eines entsprechenden unter Druck stehenden Gasvolumens in das Oberteil 12. Die Folie 3'' wird in Richtung der Form 15 gezogen bzw. gedrückt, und zwar vergleichsweise schnell, sodass sie sich in dieser Zeit nur geringfügig abkühlen kann. Hierdurch kann des Weiteren vermieden werden, dass eine ungleiche Temperaturverteilung innerhalb der Folie 3" zu unterschiedlichen Trübungen der Folie und vor allem zu ungleichmäßigen Verstreckungen der Folie führt. Bis zum Zeitpunkt t3 dauert der Formvorgang F an. In Kontakt mit den Wänden bzw. der Form 15 kühlt die Folie 3" ab und erstarrt. Bis zum Zeitpunkt t4 werden die Druckverhältnisse im Oberteil 12 bzw. im Unterteil 12 ungefähr beibehalten, um ein ausreichenden Abkühlen der Folie zu ermöglichen. Eine Mulde 5 ist somit gebildet worden. Im Zeitraum t4 bis t5 kann die Tiefziehstation 4 im Oberteil 12 und im Unterteil 13 belüftet und der Verpackungsvorgang fortgesetzt werden.

### Bezugszeichenliste:

- 1: Verpackungsmaschine
- 2: Rolle mit Unterfolie
- 3: Unterfolie
- 3': sich erwärmende Unterfolie
- 3": ausgeformte Unterfolie
- 4: Tiefziehstation
- 5: Mulde
- 6: befüllte Mulde
- 7: zu verpackendes Gut
- 8: Oberfolie
- 9: Rolle mit Oberfolie
- 10: Siegelstation
- 11: Schneideeinheit
- 12: Oberteil
- 13: Unterteil
- 14: Heizplatte
- 15: Form
- 16: Richtung des Folienvorschubs
- 17: Pumpensystem bzw. Druckspeicher
- H: Heizvorgang
- F: Formvorgang
- X: Belüften
- t: Zeitachse
- t0: Zeitpunkt
- t1: Zeitpunkt
- t2: Zeitpunkt
- t3: Zeitpunkt
- t4: Zeitpunkt
- t5: Zeitpunkt
- p: Druck
- PO: Druck im Oberteil
- PU: Druck im Unterteil

## Patentansprüche

1. Verfahren zur Herstellung einer Verpackung aus Folie mit einem Erwärmungsprozess zur Erwärmung eines Folienabschnitts (3'), wobei der erwärmte Folienabschnitt (3") gegen eine Form (15) verformt wird und wobei der erwärmte Folienabschnitt (3") während eines Ausformungsprozesses durch einen Überdruck auf einer der beiden Seiten des erwärmten Folienabschnitts (3") und einen Unterdruck auf der anderen Seite verformt wird, um eine Mulde (5) auszuformen, die nachfolgend mit einem zu verpackenden Gut (7) befüllt wird, **dadurch gekennzeichnet, dass** in einem gleichen Zeitintervall während des Erwärmungsprozesses auf beiden Seiten des Folienabschnitts (3') jeweils ein Unterdruck in Bezug auf den Umgebungsdruck erzeugt wird.

2. Verfahren nach Anspruch 1, **dadurch gekennzeichnet, dass** bezüglich ihres Betrags zu gleichen Zeitpunkten unterschiedliche Unterdrücke auf beiden Seiten des Folienabschnitts (3') während des Erwärmungsprozesses erzeugt werden.

3. Verfahren nach einem der vorgenannten Ansprüche, **dadurch gekennzeichnet, dass** während eines Zeitintervalls beim Erwärmungsprozess wenigstens ein stationärer Unterdruck auf einer der beiden Seiten des Folienabschnitts (3') erzeugt wird.

4. Verfahren nach einem der vorgenannten Ansprüche, **dadurch gekennzeichnet, dass** während des Erwärmungsprozesses die Erzeugung des jeweiligen Unterdrucks auf den beiden Seiten des Folienabschnitts (3') zu unterschiedlichen Zeitpunkten (t0, t1) einsetzt.

5. Verfahren nach einem der vorgenannten Ansprüche, **dadurch gekennzeichnet, dass** während des Erwärmungsprozesses die Erzeugung eines Unterdrucks auf einer der beiden Seiten des Folienabschnitts (3') einsetzt, sobald oder nachdem auf der anderen Seite des Folienabschnitts (3') ein stationärer Unterdruck vorliegt.

6. Verfahren nach einem der vorgenannten Ansprüche, **dadurch gekennzeichnet, dass** während des Erwärmungsprozesses die Unterdrücke zu beiden Seiten des Folienabschnitts (3') stets von ihrem Betrag her jeweils zunehmen und/oder konstant gehalten werden.

7. Verfahren nach einem der vorgenannten Ansprüche, **dadurch gekennzeichnet, dass** sich an den Erwärmungsprozess ein Ausformungsprozess zum Formen des erwärmten Folienabschnitts (3") anschließt.

8. Verfahren nach einem der vorgenannten Ansprüche, **dadurch gekennzeichnet, dass** der Folienabschnitt (3') während des Erwärmungsprozesses von der Seite her erwärmt wird, auf welcher der vom Betrag her zu gleichen Zeitpunkten größere Unterdruck herrscht.

9. Verfahren nach einem der vorgenannten Ansprüche, **dadurch gekennzeichnet, dass** die Erwärmung des Folienabschnitts (3') mittels einer Heizplatte (14) erfolgt.

10. Verfahren nach einem der vorgenannten Ansprüche, **dadurch gekennzeichnet, dass** Überdruck in Bezug auf den Umgebungsdruck während des Ausformungsprozesses auf der der Form (15) gegenüberliegenden Seite des Folienabschnitts (3") erzeugt wird.

11. Verpackungsmaschine (1) zur Herstellung einer Verpackung aus Folie, umfassend eine Tiefziehstation (4) zum Formen einer Mulde (5) in einer Unterfolie (3), mit einer Erwärmungsvorrichtung (14) zur Erwärmung eines Folienabschnittes (3'), mit einer Form (15) zum Formen des erwärmten Folienabschnitts (3") und mit einer Vorrichtung (17) zur Erzeugung von Unterdrücken jeweils zu beiden Seiten des Folienabschnitts, wobei eine Vorrichtung (17) zur Erzeugung eines Überdrucks in Bezug auf den Umgebungsdruck während des Formens auf der der Form (15) gegenüberliegenden Seite des Folienabschnitts (3") vorhanden ist, und wobei die Tiefziehstation (4) stromaufwärts einer Strecke zum Befüllen der erzeugten Mulde (5) mit einem zu verpackenden Gut (7) angeordnet ist, **dadurch gekennzeichnet, dass** die Vorrichtung (17) zur Erzeugung von Unterdrücken dazu ausgebildet ist, in einem gleichen Zeitintervall während der Erwärmung auf beiden Seiten des Folienabschnitts jeweils einen Unterdruck in Bezug auf den Umgebungsdruck zu erzeugen.

12. Verpackungsmaschine (1) nach Anspruch 11, **dadurch gekennzeichnet, dass** die Vorrichtung (17) zur Erzeugung von Unterdrücken dazu ausgebildet ist, bezüglich ihres Betrags zu gleichen Zeitpunkten unterschiedliche Unterdrücke auf beiden Seiten des Folienabschnitts (3') während der Erwärmung zu erzeugen.

13. Verpackungsmaschine (1) nach einem der Ansprüche 11 oder 12, **dadurch gekennzeichnet, dass** die Vorrichtung (17) zur Erzeugung von Unterdrücken dazu ausgebildet ist, während eines Zeitintervalls bei der Erwärmung wenigstens einen stationären Unterdruck auf einer der beiden Seiten des Folienabschnitts (3') zu erzeugen.

14. Verpackungsmaschine (1) nach einem der Ansprüche 11 bis 13, **dadurch gekennzeichnet, dass** die Vorrichtung (17) zur Erzeugung von Unterdrücken dazu ausgebildet ist, während der Erwärmung die Unterdrücke zu beiden Seiten des Folienabschnitts stets von ihrem Betrag her jeweils zu vergrößern und/oder konstant zu halten.

15. Verpackungsmaschine (1) nach einem der Ansprüche 11 bis 14, **dadurch gekennzeichnet, dass** die Vorrichtung (17) zur Erzeugung von Unterdrücken dazu ausgebildet ist, während der Erwärmung die Erzeugung des jeweiligen Unterdrucks auf den beiden Seiten des Folienabschnitts zu unterschiedlichen Zeitpunkten einsetzen zu lassen.

16. Verpackungsmaschine (1) nach einem der Ansprüche 11 bis 15, **dadurch gekennzeichnet, dass** die Vorrichtung (17) zur Erzeugung von Unterdrücken dazu ausgebildet ist, während der Erwärmung die Erzeugung eines Unterdrucks auf einer der beiden Seiten des Folienabschnitts (3') einsetzen zu lassen, sobald oder nachdem auf der anderen Seite des Folienabschnitts ein stationärer Unterdruck vorliegt.

17. Verpackungsmaschine (1) nach einem der Ansprüche 11 bis 16, **dadurch gekennzeichnet, dass** eine Erwärmungsvorrichtung (14) zur Erwärmung des Folienabschnitts (3') auf der Seite angebracht ist, auf welcher der vom Betrag her zu gleichen Zeitpunkten größere Unterdruck herrscht.

18. Verpackungsmaschine (1) nach Anspruch 17, **dadurch gekennzeichnet, dass** die Erwärmungsvorrichtung als Heizplatte (14) ausgebildet ist.

19. Verpackungsmaschine nach einem der Ansprüche 11 bis 18, **dadurch gekennzeichnet, dass** dieselbe Vorrichtung (17) sowohl zum Erzeugen von Unterdrücken, als auch zum Erzeugen eines Überdruckes ausgebildet ist.

20. Verpackungsmaschine (1) nach einem der Ansprüche 11 bis 19, **dadurch gekennzeichnet, dass** ein Formstempel zum Drücken des Folienabschnitts gegen die Form (15) vorhanden ist.

## Claims

1. Method for manufacturing a package from a foil with a heating process for heating a foil section (3'), wherein the heated foil section (3") is formed against a mould (15), and wherein the heated foil section (3") is formed during the moulding process by a positive pressure on one of the two sides of the heated foil section (3") and a negative pressure on the other side, in order to form a cavity (5) which is subsequently filled with a good (7) to be packaged, **characterised in that** negative pressure relative to the ambient pressure is generated on both sides of the foil section (3') during the same time interval during the heating process.

2. Method according to Claim 1, **characterised in that** different negative pressures, with regard to the amount, are generated on the two sides of the foil section (3') at the same points in time during the heating process.

3. Method according to one of the preceding claims, **characterised in that** during a time interval during the heating process, at least one stationary negative pressure is generated on one of the two sides of the foil section (3').

4. Method according to one of the preceding claims, **characterised in that** during the heating process, the generation of the respective negative pressure is started on the two sides of the foil section (3') at different points in time (t0, t1).

5. Method according to one of the preceding claims, **characterised in that** during the heating process, the generation of a negative pressure starts on one of the two sides of the foil section (3'), as soon as or once a stationary negative pressure is present on the other side of the foil section (3').

6. Method according to one of the preceding claims, **characterised in that** during the heating process, the negative pressures, in terms of the amount, on the two sides of the foil section (3'), are always increasing and / or are held constant.

7. Method according to one of the preceding claims, **characterised in that** a moulding process for forming the heated foil section (3") follows the heating process.

8. Method according to one of the preceding claims, **characterised in that** the foil section (3') is heated during the heating process from the side on which the larger negative pressure, as far as the amount is concerned, prevails at the same points in time.

9. Method according to one of the preceding claims, **characterised in that** the heating of the foil section (3') takes place by means of a heating plate (14).

10. Method according to one of the preceding claims, **characterised in that** the positive pressure relative to the ambient pressure is generated on the side of the foil section (3") lying opposite the mould (15) during the moulding process.

11. Packaging machine (1) for manufacturing a package from a foil, comprising a deep-drawing station (4) for forming a cavity (5) in a bottom foil (3) with a heating device (14) for heating a foil section (3'), with a mould (15) for deforming the heated foil section (3'), and with a device (17) for generating negative pressures on each of the two sides of the foil section, wherein a device for generating a positive pressure on the side of the foil section (3") facing away from the mould (15) during the forming is present, and wherein the deep-drawing station (4) is arranged upstream of a section for loading the generated cavity (5) with a good (7) to be packaged, **characterised in that** the device (17) for generating negative pressures is configured so that during the same time interval during the heating, a negative pressure relative to the ambient pressure is generated on both sides of the foil section.

12. Packaging machine (1) according to Claim 11, **characterised in that** the device (17) for generating negative pressures is formed to generate different negative pressures, with reference to the amount, on the two sides of the foil section (3') at the same points in time during the heating.

13. Packaging machine (1) according to one of claims 11 or 12, **characterised in that** the device (17) for generating negative pressures is formed in order to generate at least one stationary negative pressure on one of the two sides of the foil section (3') during a time interval during the heating.

14. Packaging machine (1) according to one of claims 11 to 13, **characterised in that** the device (17) for generating negative pressures is formed in order always to increase and / or keep constant, in each case, the negative pressures, with respect to their amount, on the two sides of the foil section during heating.

15. Packaging machine (1) according to one of claims 11 to 14, **characterised in that** the device (17) for generating negative pressures is formed in order to allow the generation of the respective negative pressure on the two sides of the foil section to start at different points of time during the heating.

16. Packaging machine (1) according to one of claims 11 to 15, **characterised in that** the device (17) for generating negative pressures is formed in order to allow the generation of a negative pressure on one of the two sides of the foil section (3') to start during the heating as soon as or once a stationary negative pressure is present on the other side of the foil section.

17. Packaging machine (1) according to one of claims 11 to 16, **characterised in that** a heating device (14) for heating the foil section (3') is mounted on the side on which the greater negative pressure, in terms of the amount, prevails at the same points of time.

18. Packaging machine (1) according to claim 17, **characterised in that** the heating device is formed as a heating plate (14).

19. Packaging machine (1) according to one of claims 11 to 18, **characterised in that** the same device (17) is configured for generating low pressure, and for generating a positive pressure.

20. Packaging machine (1) according to one of claims 11 to 19, **characterised in that** a form punch is present for pressing the foil section against the mould (15).

## Revendications

1. Procédé de fabrication d'un emballage à partir d'un film, comportant un processus de chauffage pour chauffer une section de film (3'), dans lequel la section de film chauffée (3") est conformée contre une forme (15), et dans lequel la section de film chauffée (3") est conformée lors d'un processus de formage par une surpression sur un des deux côtés de la section de film chauffée (3") et par une sous-pression sur l'autre côté, pour former une cavité (5) qui est ensuite remplie avec un produit à emballer (7), **caractérisé en ce qu'**une sous-pression par rapport à la pression ambiante est générée sur chacun des deux côtés de la section de film (3') durant un même intervalle temporel lors du processus de chauffage.

2. Procédé selon la revendication 1, **caractérisé en ce que** des sous-pressions de valeurs différentes sont générées des deux côtés de la section de film (3') à de mêmes instants durant le processus de chauffage.

3. Procédé selon l'une des revendications précédentes, **caractérisé en ce que**, durant un intervalle temporel lors du processus de chauffage, au moins une sous-pression stationnaire est générée d'un des deux côtés de la section de film (3').

4. Procédé selon l'une des revendications précédentes, **caractérisé en ce que**, durant le processus de chauffage, la génération de chaque sous-pression des deux côtés de la section de film (3') est effectuée à des instants différents (t0, t1).

5. Procédé selon l'une des revendications précédentes, **caractérisé en ce que**, durant le processus de chauffage, la génération d'une sous-pression sur un des deux côtés de la section de film (3') est effectuée dès que, ou après que, une sous-pression stationnaire est présente de l'autre côté de la section de film (3').

6. Procédé selon l'une des revendications précédentes, **caractérisé en ce que**, durant le processus de chauffage, les valeurs des sous-pressions des deux côtés de la section de film (3') sont chacune augmentées constamment et/ou sont maintenues constantes.

7. Procédé selon l'une des revendications précédentes, **caractérisé en ce que** le processus de chauffage est suivi par un processus de formage pour former la section de film chauffée (3").

8. Procédé selon l'une des revendications précédentes, **caractérisé en ce que** la section de film (3') est chauffée durant le processus de chauffage du coté sur lequel est appliquée la sous-pression dont la valeur est la plus importante à de mêmes instants.

9. Procédé selon l'une des revendications précédentes, **caractérisé en ce que** le chauffage de la section de film (3') est effectué à l'aide d'une plaque chauffante (14).

10. Procédé selon l'une des revendications précédentes, **caractérisé en ce qu'**une surpression par rapport à la pression ambiante est générée durant le processus de formage du côté de la section de film (3") opposé à la forme (15).

11. Machine d'emballage (1) pour la fabrication d'un emballage en film, comprenant une station d'emboutissage (4) pour former une cavité (5) dans un film inférieur (3), avec un dispositif de chauffage (14) pour chauffer une section de film (3'), une forme (15) pour former la section de film chauffée (3") et un dispositif (17) pour générer des sous-pressions sur chacun des deux côtés de la section de film, dans lequel un dispositif (17) est disponible pour générer une surpression par rapport à la pression ambiante durant le formage du côté de la section de film (3") opposé à la forme (15), et dans lequel la station d'emboutissage (4) est agencée en amont d'une section de remplissage de la cavité générée (5) avec un produit à emballer (7), **caractérisée en ce que** le dispositif (17) de génération de sous-pressions est constitué de façon à générer une sous-pression par rapport à la pression ambiante sur chacun des deux côtés de la section de film durant un même intervalle temporel lors du chauffage.

12. Machine d'emballage (1) selon la revendication 11, **caractérisée en ce que** le dispositif (17) de génération de sous-pressions est constitué de façon à générer des sous-pressions de valeurs différentes des deux côtés de la section de film (3') à de mêmes instants durant le chauffage.

13. Machine d'emballage (1) selon l'une des revendications 11 ou 12, **caractérisée en ce que** le dispositif (17) de génération de sous-pressions est constitué de façon à générer, durant un intervalle temporel lors du chauffage, au moins une sous-pression stationnaire sur un des deux côtés de la section de film (3').

14. Machine d'emballage (1) selon l'une des revendications 11 à 13, **caractérisée en ce que** le dispositif (17) de génération de sous-pressions est constitué de façon à, durant le chauffage, augmenter constamment et/ou maintenir constantes les valeurs de chacune des sous-pressions des deux côtés de la section de film.

15. Machine d'emballage (1) selon l'une des revendications 11 à 14, **caractérisée en ce que** le dispositif (17) de génération de sous-pressions est constitué de façon à, durant le chauffage, laisser démarrer la génération de chaque sous-pression des deux côtés de la section de film à des instants différents.

16. Machine d'emballage (1) selon l'une des revendications 11 à 15, **caractérisée en ce que** le dispositif (17) de génération de sous-pressions est constitué de façon à, durant le chauffage, laisser démarrer la génération d'une sous-pression sur l'un des deux côtés de la section de film (3') dès que, ou après que, une sous-pression stationnaire est présente de l'autre côté de la section de film.

17. Machine d'emballage (1) selon l'une des revendications 11 à 16, **caractérisée en ce qu'**un dispositif de chauffage (14) est agencé pour le chauffage de la section de film (3") du côté sur lequel est appliquée la sous-pression dont la valeur est la plus importante à de mêmes instants.

18. Machine d'emballage (1) selon la revendication 17, **caractérisée en ce que** le dispositif de chauffage est constitué sous forme d'une plaque chauffante (14).

19. Machine d'emballage selon l'une des revendications 11 à 18, **caractérisée en ce que** le même dispositif (17) est constitué aussi bien pour générer des sous-pressions que pour générer une surpression.

20. Machine d'emballage (1) selon l'une des revendications 11 à 19, **caractérisée en ce qu'**un poinçon de formage est disponible pour appliquer la section de film contre la forme (15).
